# EUROPEAN PATENT SPECIFICATION

(11) **EP 2 060 072 B1**
(45) Date of publication and mention of the grant of the patent: **05.07.2017**
(21) Application number: 07803709.0
(22) Date of filing: 16.08.2007
(51) Int. Cl.: H04L 1/18

(54) **HIGH-SPEED DATA PACKET TRANSMISSION SCHEME**
SCHNELLES DATENPAKETÜBERTRAGUNGSVERFAHREN
SCHÉMA DE TRANSMISSION PAR PAQUET DE DONNÉES HAUTE VITESSE

(30) Priority: 17.08.2006 FI 20065520
(43) Date of publication of application: 20.05.2009
(73) Proprietor: Nokia Technologies Oy, 02610 Espoo (FI)
(72) Inventor: RANTA-AHO, Karri, 02650 Espoo (FI); MALKAMÄKI, Esa, 02130 Espoo (FI)
(74) Representative: Kolster Oy Ab
(86) International application number: PCT/FI2007/050446
(87) International publication number: WO 2008/020117

(56) References cited:
- EP-A1- 1 389 848
- EP-A1- 1 583 272
- WO-A1-2004/062205
- WO-A1-2005/109730
- WO-A2-2006/114689
- WO-A2-2008/132599
- US-A1- 2003 002 472
- ANONYMOUS: "TP on Reduced Complexity HS-SCCH-less Operation", 3GPP TSG-RAN WG1 46, TALLINN, ESTONIA , vol. R1-062421, no. 46 28 August 2006 (2006-08-28), pages 1-10, XP002594620, Retrieved from the Internet: URL:http://www.quintillion.co.jp/3GPP/TSG_ RAN/TSG_RAN2006/TSG_RAN_WG1_RL1_9.html [retrieved on 2010-07-28]
- "3rd Generation Partnership Project; Technical Specification Group Radio Access Network; Continuous Connectivity for Packet Data Users; (Release 7)", 3GPP STANDARD; 3GPP TR 25.903, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 May 2006 (2006-05-01), pages 1-104, XP050369324,

## Description

### Field

The invention relates to high-speed data packet transmission in a wireless telecommunication system.

### Background

The 3^{rd} Generation Partnership Project (3GPP) release 5 specifications introduced High-speed Downlink Packet Access (HSDPA) as a part of the Wideband Code Division Multiple Access (WCDMA) standard for Universal Mobile Telecommunication System (UMTS). Release 6 introduced a Fractional Dedicated Physical Channel (DPCH) to be used with HSDPA for support of a high number of simultaneous HSDPA users in a cell. The 3GPP has further seen a proposal for Release 7 for eliminating the need for a High-speed Shared Control Channel (HS-SCCH) channel for HSDPA operation when applied with voice over Internet protocol (VoIP) traffic or another similar traffic low data rate source.

The Release 6 HSDPA operation uses the HS-SCCH for Node B of a network to indicate to given user equipment (UE) that there is High-speed downlink Shared Channel (HS-DSCH) transmission on one or more of multiple parallel High Speed Physical Downlink Shared Channels (HS-PDSCH) allocated to the UE. The HS-SCCH thus identifies the intended receiver and informs the receiver of the characteristics of the HS-PDSCHs to be used for transmitting the actual data packet. Such characteristics include a transport block size, the number of HS-PDSCH spreading codes and actual spreading code numbers to be used, a modulation (QPSK/16QAM) and redundancy version of the HS-DSCH payload transmitted during a given Transmission Time Interval (TTI).

Release 7 HSDPA with no HS-SCCH proposes to eliminate the HS-SCCH completely for specific sized small HS-DSCH packets transmitted on a pre-allocated HS-PDSCH code channel. The HSDPA operation with no HS-SCCH eliminates the need for HS-SCCH if a data packet being transmitted to given UE is one of two predefined sizes, is transmitted on a pre-allocated HS-PDSCH spreading code channel, and has a predefined format (modulation scheme, channelization codes, Hybrid Automatic Repeat Request (HARQ) process identifier, redundancy version, and transport block size). The UE simply tries to constantly receive the predefined transport block sizes from the predefined HS-PDSCH spreading code channel, and if a data cyclic redundancy check (CRC), which is user-specific, indicates that the packet is received correctly, the UE knows that there was packet transmission to that user and that it was received correctly.

The benefit of the proposal is that with a large number of users with small but constant data rate needs (such as VoIP users) the cost of HS-SCCH compared to actual data delivery is significantly high and a larger system capacity could be obtained by avoiding the transmission of HS-SCCH when transmitting the most frequent small packets.

A problem with the above is related to HARQ retransmissions. In the present HSDPA Release 6 operation, if the HS-DSCH packet delivery fails, the UE will transmit a negative acknowledgement (NACK) to Node B and Node B may retransmit the HS-DSCH packet at a later occasion by using a different HARQ redundancy version. Notably, the timing of the retransmission is completely subject to a decision of Node B.

The HSDPA operation with no the HS-SCCH requires the retransmissions to take place at an exact known time instant and to use an exact and predefined redundancy version sequence (or chase combining only). This restricts the possibility for Node B to schedule the retransmissions from what is possible in Release 6 HSDPA operation.

Furthermore, the HSDPA operation with no HS-SCCH, as proposed in 3GPP, requires the UE to blindly combine possible initial transmissions and possible retransmissions in an iterative manner until it finds a CRC that indicates a correctly received packet. This implies an increased processing burden to the UE.

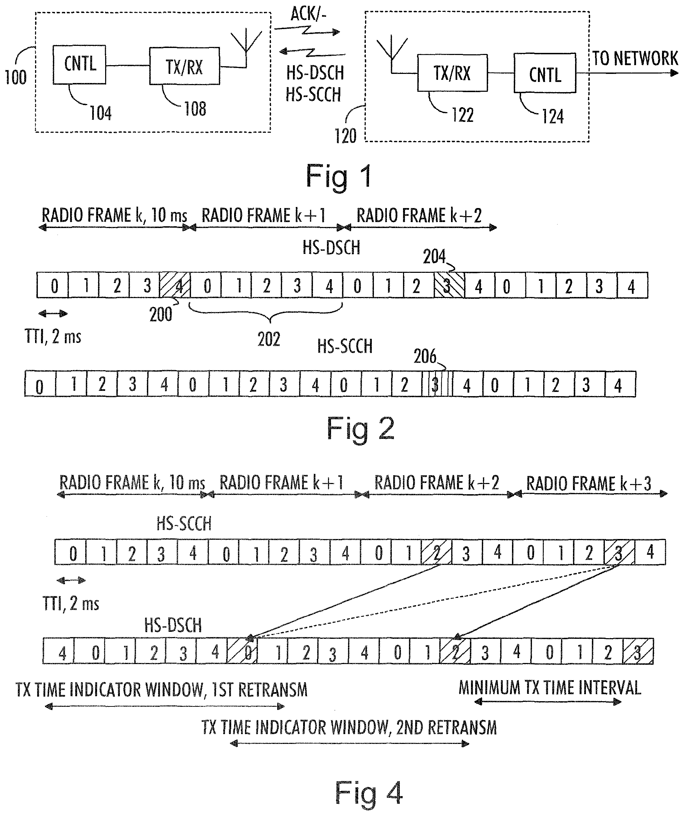

3GPP TSG RAN WG1 documents R1-051511 and R1-060450, describe the HSDPA operation without HS-SCCH, thus requiring synchronous retransmission operation and blind HARQ combining by the UE. 3GPP TR 25.903, V1.0.0 (2006-05) discloses, inter alia, HS-SCCH-less operation. EP 1 389 848 A1 relates to incremental redundancy or hybrid ARQ Type II or III retransmission techniques in mobile communications systems and is particularly applicable to cellular systems. The functional behaviour of HARQ processes is illustrated and in Figure 4. A physical channel is used to transmit data to a receiver whereby the physical channel is a so-called HS-DSCH (High Speed - Downlink Shared Channel), where different users are time multiplexed.

### Brief description of the invention

An object of the invention is to provide an improved high-speed packet radio service.

According to an aspect of the invention, there is provided a method comprising: transmitting an initial transmission of a data packet on a data channel of a packet radio service, the transmission being carried out without a control channel message, transmitting a retransmission data packet on the data channel, and transmitting a control channel message comprising a transmission time indicator indicating a transmission time interval of a previous transmission of the data packet.

In an embodiment, the control channel message is transmitted substantially simultaneously with the retransmission data packet.

In an embodiment, the method further comprises deriving the transmission time indicator from the transmission timing of the previous transmission of the data packet.

In an embodiment, the transmission time indicator identifies a radio frame number and a radio sub-frame number of the radio sub-frame used for the previous transmission of the data packet. In an embodiment, the transmission time indicator is (5·k+n) mod 8, wherein k is the radio frame number and n is the radio sub-frame number identifying the correct sub-frame within the radio frame. In an embodiment, the transmission time indicator defines the number of sub-frames in addition to the minimum number of sub-frames between the initial transmission and the retransmission. In an embodiment, the transmission time indicator identifies a hybrid automatic repeat request (HARQ) process related to the data packet, and the transmission time indicator is transmitted in the control channel message at a location also used for transmitting a HARQ process number.

In an embodiment, the packet radio service is High-speed Downlink Packet Access (HSDPA), the data channel is a High-speed Downlink Shared Channel (HS-DSCH), and the control channel is a High-speed Shared Control Channel of Wideband Code Division Multiple Access (W-CDMA) standard for Universal Mobile Telecommunications System (UMTS).

According to another aspect of the invention, there is provided a method comprising: performing data packet detection with pre-determined reception parameters but without a reception of a control channel message of a packet radio service, receiving a control channel message comprising a transmission time indicator indicating a transmission time interval of a previous transmission of the data packet, if no data packet was detected, receiving the retransmission data packet, combining the retransmission data packet and the previously transmitted data packet according to the transmission time indicator, and detecting the previously transmitted data packet and the retransmission data packet.

In an embodiment, the method further comprises identifying the timing of the previously transmitted data packet from the transmission time indicator.

In an embodiment, the method further comprises: buffering data received in transmission time intervals in which no data packet was detected, and discarding buffered data associated with a transmission time interval for which a difference from a current transmission time interval exceeds a maximum number of transmission time intervals between two transmissions associated with the same data packet.

In an embodiment, the transmission time indicator defines the number of sub-frames in addition to a minimum number of sub-frames between the initial transmission and the retransmission of the data packet.

In an embodiment, the transmission time indicator identifies a radio frame number and a radio sub-frame number of the radio sub-frame used for the previous transmission of the data packet. In an embodiment, the transmission time indicator identifies a hybrid automatic repeat request (HARQ) process related to the data packet, and the transmission time indicator is received at a location used for transmitting a HARQ process number.

In an embodiment, the method further comprises detecting signaling information comprised in the control channel message and indicating whether the information at the location used for transmitting the HARQ process number comprises the transmission time indicator indicating the transmission time interval of the previous transmission of the data packet, or whether it is a HARQ process number related to another data packet.

In an embodiment, the packet radio service is High-speed Downlink Packet Access (HSDPA), the data channel is a High-speed Downlink Shared Channel (HS-DSCH), and the control channel is a High-speed Shared Control Channel of a Wideband Code Division Multiple Access (W-CDMA) standard for a Universal Mobile Telecommunications System (UMTS).

According to another aspect of the invention, there is provided an apparatus, comprising an interface configured to transmit radio signals, and a processing unit operationally coupled with the interface. The processing unit is configured to transmit, through the interface, an initial transmission of a data packet on a data channel of a packet radio service, the transmission being carried out without a control channel message, transmit a retransmission data packet on the data channel, and transmit a control channel message comprising a transmission time indicator indicating a transmission time interval of a previous transmission of the data packet.

According to another aspect of the invention, there is provided an apparatus, comprising an interface configured to receive radio signals, and a processing unit operationally coupled with the interface. The processing unit is configured to perform a data packet detection with pre-determined reception parameters but without a reception of a control channel message, receive a control channel message comprising a transmission time indicator indicating a transmission time interval of a previous transmission of the data packet, if no data packet was detected, receive the retransmission data packet, combine the retransmission data packet and the previously transmitted data packet according to the transmission time indicator, and detect the contents of the previously transmitted data packet and the retransmission data packet.

According to further aspects of the invention, there is provided a computer program product as specified in claim 18.

### List of drawings

In the following, the invention will be described in greater detail with reference to the embodiments and the accompanying drawings, in which
Figure 1 illustrates a wireless telecommunication system supporting a high-speed packet radio service according to an embodiment of the invention;
Figure 2 illustrates data transmission related to a high-speed packet radio service according to an embodiment of the invention;
Figure 3 illustrates a process for transmitting and receiving a data packet according to an embodiment of the invention, and
Figure 4 illustrates data transmission comprising multiple retransmissions related to a high-speed packet radio service according to an embodiment of the invention.

### Description of embodiments

With reference to Figure 1, let us examine an example of a wireless telecommunications system to which embodiments of the invention can be applied. The system may be a Universal Mobile Telecommunications System (UMTS) according to Wideband Code Division Multiple Access (W-CDMA) providing a high-speed downlink packet radio service, such as High-speed Downlink Packet Access (HSDPA).

The system comprises a base station (or Node B) 120 and user equipment 100 (UE) communicating with the base station 120 via an air interface. The base station 120 comprises a communication interface 122 providing the base station with radio signal transmission and reception capability. The communication interface 122 may carry out procedures necessary to convert digital data to be transmitted into radio signals and received radio signals into digital data.

The base station 120 further comprises a processing unit 124 configured to control the operations carried out at the base station 120. The processing unit 124 is operationally coupled with the communication interface and it controls the transmission and the reception of information signals. The processing unit 124 may further be connected to other parts of a UMTS radio access network through another communication interface (not shown). The processing unit 124 may be implemented by a digital signal processor (DSP) or a micro controller configured with suitable software. Other implementations, an application-specific integrated circuit (ASIC) for example, are also possible.

The UE 100 comprises a communication interface 108 providing the UE with radio signal transmission and reception capability. The communication interface 108 may carry out procedures necessary to convert digital data to be transmitted into radio signals and received radio signals into digital data.

The UE 100 further comprises a processing unit 104 configured to control the operations carried out at the UE 100. The processing unit 104 is operationally coupled with the communication interface 108 and it controls the transmission and the reception of information signals. The UE 100 may additionally comprise other components, for example a user interface, but these are not discussed herein for the sake of clarity of the description. The processing unit 104 may be implemented by a digital signal processor (DSP) or a micro controller configured with suitable software. Other implementations, ASIC for example, are also possible.

While receiving an HSDPA service, the UE 100 receives data packets on High-speed Downlink Shared Channel (HS-DSCH), and control messages related to the reception of the data packets on High-speed Shared Control Channel (HS-SCCH). Upon reception and error-free detection of a data packet, the UE 100 transmits an ACK signal on High-speed Dedicated Physical Control Channel (HS-DPCCH). Upon an erroneous detection of a data packet, the UE 100 may transmit a negative ACK signal (NACK).

Next, an embodiment of the invention will be described with reference to Figure 2. According to Release 7 HSDPA, data packets may be transmitted with no a HS-SCCH message indicating the transmission timing of the data packet. In such a case, UE receives a radio resource control message defining transport parameters for the data packets to be transmitted to the UE, and then the UE starts detecting and decoding received data according to the received transport parameters, in order to check whether there is a data packet transmission for the UE. The transport parameters may define a modulation scheme, channelization codes, redundancy version, and transport block size to be used in the transmission of data packets. The UE then uses these parameters as the reception parameters.

A serving base station transmits a data packet to the UE in a transmission time interval (TTI) denoted by 200 in Figure 2. Now, let us assume that this is an initial transmission of the data packet and that the base station has transmitted the transport parameters to the UE beforehand. Accordingly, the data packet is transmitted without a separate HS-SCCH message which would indicate that the TTI comprises the data packet for the UE. Therefore, the UE attempts to detect, with the received reception parameters, the data packet expected to be received on a data channel. The detection is performed without the knowledge of the actual transmission time interval used in the transmission of the data packet. If the UE is able to decode the data packet, it transmits an ACK signal to the base station. If the UE is not able to decode the data packet, i.e. it determines that the TTI either did not include a data packet for it, or that if it did, the reception was not successful, the UE may store the data received within the TTI to a buffer for later use, which will be described in greater detail below.

If the base station does not receive the ACK-signal within a given time period, it transmits a retransmission data packet and this time together with a control channel (HS-SCCH) message. The retransmission of the data packet and the transmission of the HS-SCCH message are carried out within the TTIs denoted by 204 and 206, respectively, in Figure 2. The retransmission may comprise the same encoded data packet transmitted in the previous transmission or it may comprise additional information facilitating the detection and decoding of the previously transmitted data packet. Accordingly, both chase combining and incremental redundancy are supported as HARQ-schemes. The HS-SCCH message and the retransmission of the data packet may be carried out simultaneously, as is the case in the conventional Release 6 HSDPA transmission. The term 'simultaneously' is to be understood in a broad sense, since typically the HS-SCCH message transmission is started a few (two, for example) time slots before the data packet. The HS-SCCH message comprises an indication of whether the data packet is a retransmission of a previously sent data packet or whether it is an initial transmission of a new data packet. This indication may be derived from a one-bit New Data Indicator (NDI) comprised in the HS-SCCH message, or a new indication may be specified, as one of those described below. The HS-SCCH message may also comprise new transport parameters for the retransmission of the data packet. According to an embodiment of the invention, the HS-SCCH message may also include a transmission time indicator indicating the transmission time interval of the previous transmission of the data packet. In this example case, the previous transmission is the initial transmission carried out in the TTI denoted by 200. Such information is needed for the UE to know which TTIs comprise data packets that should be combined together for correctly decoding the data.

When the UE observes that there is an HS-SCCH message destined to it, it detects and decodes its contents and obtains the indication whether the transmission is a retransmission to a previously attempted initial transmission, which may have been sent with no accompanying HS-SCCH. The UE may also optionally receive new transport parameters to be used in detecting and decoding the retransmission data packet. Additionally, the UE obtains the transmission time indicator related to the previous transmission of the data packet. On the basis of this transmission time indicator, the UE obtains knowledge about the TTI used in the previous transmission of the data packet. Since the UE now has the knowledge of the TTI of the previous (initial) transmission and the retransmission of the data packet and the transport parameters for the both transmissions, it may detect the previously transmitted and buffered data packet and the retransmitted data packet, combine the contents of them and decode the combined data. As mentioned above, the UE had stored the TTIs containing data that it was not able to detect in the buffer. The UE may process the previously transmitted data packet with the old transport parameters and the retransmission of the data packet with the new transport parameters obtained from the HS-SCCH message.

After the UE has detected the previously transmitted data packet and the retransmission of the data packet, it may combine the data packets according to a conventional HARQ procedure and attempt decoding of the combined information. Then, the UE may check whether the combined data packet still comprises errors. If the data packet contains no errors, the UE may transmit an ACK signal to the base station. If the data packet still contains errors, the UE may transmit a NACK signal to the base station. Alternatively, the UE may transmit nothing. If the base station does not receive the ACK signal within a given time period, or receives the NACK signal, it transmits an additional retransmission data packet. The additional retransmission data packet may be transmitted as the retransmission data packet described above. This way, the base station may transmit retransmission until it receives the ACK signal.

The transmission time indicator concerning the TTI in which the previous transmission of the data packet was carried out may be transmitted in a location of the HS-SCCH message also used for transmitting a HARQ process number. Since the previous (initial) transmission was transmitted with no HS-SCCH message, the previously transmitted data packet has no HARQ process number yet. Accordingly, the HS-SCCH message may comprise specific information indicating whether the information in the location of the HARQ process number relates to a data packet transmitted previously with no a HS-SCCH message (and with no the HARQ process number) or to a conventional HARQ process according to Release 6 of 3GPP. The specific information may be included as explicit signaling information, for example with a UE-specific identifier, or the UE may derive the information implicitly from the HS-SCCH message. The HS-SCCH message may, for example, have a specific information bit pattern that would not be a valid combination according to Release 6 of 3GPP.

This specific information bit pattern may, for example, be one of the currently (Release 7) unused (7-bit) patterns in a channelization code set field of the HS-SCCH. If this specified pattern is received on HS-SCCH, the UE knows that it should use the default channelization code or codes received at the beginning of the connection via RRC signaling (same or different set as for the initial transmission can be configured for the retransmission). Furthermore, the UE knows that this HS-SCCH refers to a retransmission of a data packet sent on HS-DSCH which was initially transmitted without HS-SCCH. Based on this bit pattern, the UE also knows how to interpret the other bits on HS-SCCH. This approach, however, cannot be used if the base station wishes to use any arbitrary channelization code set for the retransmission (i.e., different from the default set given at the beginning of the connection.

An alternative solution is to dedicate the value of a given transport parameter only for data packet transmission with no HS-SCCH message. For example, a fixed transport block size, or a few sizes, may be assigned for this type of transmission. This fixed transport block size may be transmitted to the UE beforehand through the RRC signaling (together with other parameters) and again in HS-SCCH messages related to retransmissions of data packets whose initial transmission was sent without the HS-SCCH message. When the UE detects an HS-SCCH message and discovers the transport block size dedicated to this type of transmission, it determines that the HS-SCCH message is a retransmission of a data packet whose initial transmission was sent without the HS-SCCH message. Accordingly, the UE is able to decode the contents of the HS-SCCH message properly and obtain knowledge of the TTI used for the previous transmission of the corresponding data packet.

Another solution is to use the UE specific identifier included in the HS-SCCH message. UE may be provided with two identifiers, one for normal transmission and one for retransmissions of data packets transmitted initially without the HS-SCCH message. The UE may then detect the identifier contained in a received HS-SCCH message and determine whether the information in the location of the HARQ process number relates to a data packet transmitted previously without a HS-SCCH message (and without the HARQ process number) or to a conventional HARQ process according to Release 6 of 3GPP.

Consequently, the UE may detect the signaling information comprised in the HS-SCCH message and indicating whether the information at the location used for transmitting the HARQ process number comprises the transmission time indicator indicating the transmission time interval of the previous transmission of the data packet, or whether it is a HARQ process number related to another data packet.

The HARQ process number in the HS-SCCH message is a 3-bit word. Two exemplary methods of transmitting the transmission time indicator with three bits are now described. In the example of Figure 2, each radio frame includes five sub-frames, and each sub-frame of a radio frame is numbered. Furthermore, each radio frame is also numbered with a radio frame number. The radio frame numbers are often referred to as a "connection frame number" or "system frame number" incremented every 10 ms. According to an embodiment of the invention, the transmission time indicator identifies a radio frame number and a radio sub-frame number of the radio sub-frame used for the previous transmission of the data packet. Let us denote the radio frame number with k and the radio sub-frame number with n. Now, the transmission time indicator for a transmission attempt may be obtained from the timing of that transmission attempt as (5·k+n) mod 8. For example, if the previous (or initial) transmission of the data packet occurred at radio frame 2 and radio sub-frame 4, the transmission time indicator transmitted in the HS-SCCH message of the subsequent retransmission used to identify with which transmission attempt to combine the retransmission with is (5·2+4) mod 8 = 6, which may be presented in three bits. This transmission time indicator may be considered to be equivalent to a HARQ process number as used in standard release 6. Here, the window to which the three-bit number refers is a maximum of eight sub-frames long and the last sub-frame in the window is the sub-frame which was transmitted the minimum number of TTIs earlier (the minimum referring to the minimum number of TTIs between (re)transmissions). Release 5 HSDPA specifies this minimum to be 5 TTIs (or subframes), however, future releases may define this as a parameter. In Figure 2, a retransmission 204 whose parameters are sent on an HS-SCCH message 206, the window for earlier transmission to be combined with the retransmission 204 starts in the first sub-frame (n=0) of radio frame k and ends in the third sub-frame (n=2) of radio frame k+1.

According to another embodiment of the invention, the transmission time indicator may define the number of sub-frames, in addition to the minimum number of sub-frames, between the previous (or initial) transmission and the retransmission of the data packet. A pre-determined minimum number of TTIs (or sub-frames) is provided between two transmissions related to the same data packet, and this minimum number of TTIs is known by the UE and the base station. The minimum number of TTIs is denoted by reference numeral 202 in Figure 2, and it is five sub-frames in this example. The total number of sub-frames between the previous (or initial) transmission and the retransmission of the data packet is seven and, accordingly, the transmitted transmission time indicator is two (2+5=7), where 5 is the minimum number of TTIs (or subframes) between the two transmissions.

In addition to the three bits used for transmitting the HARQ process number, other bits contained in the HS-SCCH message may be dedicated for the transmission time indicator to expand the time window which could be indicated. For example, an NDI may be used for increasing the length of the transmission time indicator to four bits. Accordingly, the length of the retransmission window would become 16 sub-frames. This would increase the buffering capability required from the UE but increase flexibility in the allocation of the retransmissions at the base station.

Alternatively, or additionally, redundancy versions definable in the HS-SCCH message may be redefined. According to conventional Release 6 operation, eight redundancy versions may be defined by the HS-SCCH message. Accordingly, a redundancy version used is defined by three bits. The number of redundancy versions may be reduced in the data packet transmission according to an embodiment of the invention. The number of redundancy versions may be defined in two bits (four redundancy versions), and the extra bit could be allocated to the expansion of the time window of the transmission time indicator. Together with the NDI and the HARQ bits, the time window of the transmission time indicator would now become 32 sub frames (five bits).

Another solution is to redefine the redundancy versions in a manner similar to that currently being used in HSUPA (Enhanced Dedicated Channel, E-DCH), where a retransmission sequence number is used. The retransmission sequence number indicates directly the first, the second, etc., transmission and at the same time the redundancy version which is tied to the retransmission number. This would be beneficial in that if a retransmission is missed (HS-SCCH decoding failure). In such a case, the next retransmission would indicate the TTI of the previous retransmission (normal transmission time indicator according to an embodiment of the invention), and the UE may deduce from the retransmission sequence number which redundancy version was used in the previous retransmission. Currently, redundancy versions can be sent in any order and, thus, the redundancy version of the next transmission reveals nothing about of the previous transmission. The same benefit as that described above may be achieved simply by defining a definite order for the redundancy versions, and then the UE could deduce the redundancy version of the previous transmission from the current transmission. In such a case, the redundancy version is not necessarily bound to the retransmission sequence number.

The embodiment described above, where the fixed transport block size is utilized to indicate retransmission has the drawback that the particular transport block size cannot be used for initial transmission with HS-SCCH. This may be necessary if the channelization code(s) reserved for HS-SCCH-less initial transmission are used by some other user. This can be solved with another embodiment as follows. At the beginning of a connection, the transport parameters to be used with HS-SCCH-less initial transmission are preconfigured to the UE, i.e. sent to the UE using e.g. RRC signaling. These parameters include parameters normally sent on HS-SCCH, including the transport block size. As described above, the network may communicate several parameter sets to the UE at the beginning and then the UE blindly tries to decode using all the parameter sets. When the UE receives an HS-SCCH intended for it (UE specific masking and CRC match), it reads the transport block size field. If that indicates one of the preconfigured transport block sizes, the UE uses a new interpretation of the other fields of HS-SCCH. This new interpretation may include e.g. the following: NDI is redefined such that it is always 0 with initial transmission and 1 with retransmission. Furthermore, the HARQ process identifier for the initial transmission can be considered obsolete since the HARQ combining is carried out based on the transmission time indicator transmitted on HS-SCCH of the retransmission. Alternatively, the HARQ process identifier of the initial transmission can be derived from sub-frame and radio frame numbers as described above and the retransmission would then use this same number. The point here is that NDI is used to distinguish between these different interpretations of the HARQ process identifiers. Instead of using the NDI to indicate the first/retransmission, also the redundancy version (RV) could be used. It would simply be defined that the initial transmission always uses a given RV, e.g., RV=0 (000 in binary), and retransmissions always use other RVs. Advantageously, RVs may be used in a given order, e.g. RV=0 for initial transmission, RV=1 for first retransmission, RV=2 for second retransmission, etc. With these arrangements (either NDI or RV indicating first/retransmission), HS-SCCH can be used even with the initial transmission although it would normally be used only with retransmissions. For other transport block sizes, the normal Release 6 interpretation of the HS-SCCH would be used and HS-SCCH would be sent with every transmission.

As mentioned above, the UE may buffer data received in TTIs in which no data packet was detected. As described above, the buffering is performed when the UE cannot decode a data packet intended to it before retransmission. Upon reception of the transmission time indicator, the UE knows the exact TTI used for transmitting the (previous) data packet and it may combine the buffered previous transmission and the current retransmission and detect and decode the data packet. The UE may buffer data received in a given number of TTIs, and the maximum amount of buffered data is defined by the maximum delay between a transmission and a retransmission related to the same data packet (or equivalently the window size defined above plus the minimum interval between transmissions). Accordingly, the UE may discard buffered data associated with a TTI for which the difference from the current transmission time interval exceeds the maximum number of TTIs between two transmissions associated with the same data packet.

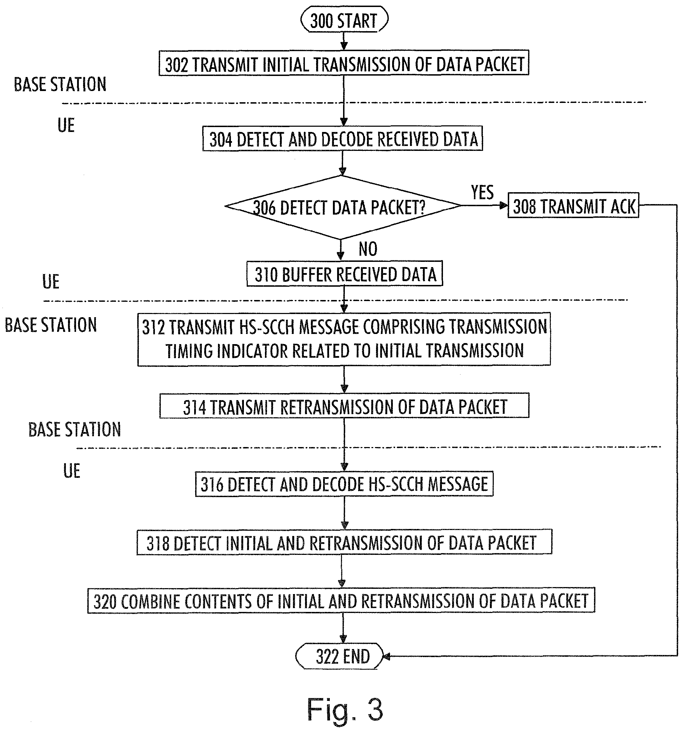

Figure 3 illustrates a method or a process for transmitting data between a base station and UE in a telecommunication system supporting HSDPA as a high-speed packet radio service. The process starts in block 300. Let us assume that a base station has transmitted reception parameters, i.e. transport parameters with which data packets will be transmitted, to the UE beforehand.

In block 302, the base station transmits an initial transmission of a data packet to the UE on a data channel (HS-DSCH). The base station transmits the initial transmission without a control channel message indicating the transmission timing of the data packet. In block 304, the UE performs data packet detection with pre-determined reception parameters but without the knowledge of the timing of the data packet. Accordingly, the UE decodes, based on a UE-specific CRC, data received in a given transmission time interval, and if the decoding of the received data is successful, i.e. the UE detects the data packet in block 306, the UE determines that the data packet was destined to it and transmits an ACK signal to the base station in block 308. From block 308, the process moves to block 322 where the process ends. If the decoding is not successful, i.e. no data packet was detected in block 306, the UE buffers the data in block 310. Another possible implementation is that the UE first detects and decodes the retransmission alone and, if this is not successful, combines it with the previous transmission.

If the base station receives no ACK signal related to the initial transmission of the data packet (the transmission in block 302), in block 312 it transmits a control channel (HS-SCCH) message comprising a transmission timing indicator related to the initial transmission of the data packet. The control channel message further indicates a retransmission data packet. The base station transmits the retransmission data packet on the data channel in block 314.

In block 316, the UE detects the control channel message destined to it and decodes the control channel message. From the control channel message, the UE obtains knowledge concerning the transmission time interval of the initial transmission of the data packet together with the knowledge that a retransmission data packet is provided on the data channel. In block 318, the UE detects the initial transmission of the data packet and the retransmission data packet on the basis of the information obtained from the control channel message. In block 320, the UE combines the contents of the initially transmitted data packet and the retransmission data packet and decodes the data packet in order to obtain an error-free data packet.

Figure 4 shows an example of several retransmissions of a packet (two retransmissions in this case). The upper part of the figure shows HS-SCCH (control) while the lower part shows HS-DSCH (data). The numbers within TTIs refer to sub-frame numbers, while radio frame numbers (k, k+1, k+2, etc.) are given above the HS-SCCH. The initial transmission in sub-frame 0 of radio frame k+1 is transmitted without HS-SCCH, using the transport parameters communicated to the UE beforehand (using e.g. RRC signaling). The first retransmission in this example occurs after six TTIs (six sub frames between first and second transmission) in sub frame 2 of radio frame k+2. This retransmission is preceded by HS-SCCH transmission which tells the transport parameters of the current retransmission as well as the transmission time indicator indicating in which TTI the first transmissions occurred (solid arrow pointing backwards). (Transmission time indicator can be implemented in many ways, as described above.) The UE can now combine the first transmission and the retransmission according to a HARQ procedure and attempt to decode the combined packet. If the decoding is not successful (CRC fails), the UE buffers the HARQ combined packet in the position where the retransmission should have been buffered (if no HS-SCCH were received) and may send a NACK message to the base station. Since the base station receives no ACK, it retransmits the data packet the second time in sub-frame 3 of radio frame k+3, again together with HS-SCCH. HS-SCCH now indicates with the transmission time indicator when the previous retransmission occurred (solid arrow). Thus, when receiving the second retransmission, the UE is able to HARQ combine it with the previous retransmission which already was HARQ combined with the initial transmission. The UE thus has a packet which is a HARQ combination of all three transmissions. In a similar way, it is possible to continue with even further retransmissions.

Figure 4 also shows transmission time indicator windows. Such a window shows which earlier sub-frames (or TTIs) can be addressed with the transmission time indicator. In this figure, we assume a 3-bit transmission time indicator and, therefore, the window size is 8. Figure 4 also shows the minimum transmission interval between (re)transmissions of a data packet. In this example, the minimum interval is five sub-frames.

It is beneficial to send NACK, if the HS-SCCH of a retransmission was received correctly but data detection failed. Then the base station knows whether or not the UE received the HS-SCCH correctly. If no HS-SCCH of the first retransmission is detected (HS-SCCH CRC fails), the UE is unable to combine the first transmission and the first retransmission. In such a case, the UE should transmit no NACK since the UE does not know whether or not there was a transmission for it. However, the UE should try to decode the transmission with the predetermined parameters (received through RRC signaling) and, if not successful, buffer the data assuming that the predetermined parameters were used. Then the base station may retransmit the packet second time. If this retransmission occurs fast enough, the transmission time indicator may still refer to the initial transmission as indicated in Figure 4 with a dashed arrow pointing from the HS-SCCH of the second retransmission to the initial data transmission. This can be carried out if the initial transmission is still within the transmission time indicator window of the second retransmission. Alternatively, the transmission time indicator of the second retransmission may refer to the first retransmission which has been buffered, provided that the first retransmission also used the predetermined parameters.

Typically, the transmission time indicator in the HS-SCCH of a retransmission would refer to the previous (re)transmission, but as explained above, in some special cases it may also refer to an earlier transmission of the same data packet.

As to buffering and combining in the UE, several different alternatives exist. An alternative is to combine the retransmission immediately with the previous transmission(s) and only decode the combined packet. Alternatively, the UE may first try to decode the latest retransmission alone, then combine it with the previous transmission and decode it again, etc. This alternative requires that each transmission be buffered separately, and thus requires more buffer but, in some cases, may perform better (combining a rather good packet which could have been decoded alone with a very noisy earlier version may result in a packet which is undecodable).

It should be noted that with the proposed arrangement of sending HS-SCCH only with the retransmissions, it is possible to implement a pure ARQ system without HARQ combining of the transmissions. If each (re)transmission is sent using the preconfigured parameters without HS-SCCH, the UE combines no transmissions, and we end up with a pure ARQ system.

The invention has been described using HSDPA as an example. Thus the control channel is HS-SCCH and data channel HS-DSCH. The invention may also be applied to HSUPA i.e. to uplink transmission. In such a case, the corresponding channels would be E-DPCCH as the control channel and E-DCH as the data channel. The invention can also be applied to other wireless systems using a control channel to indicate some transport parameters and a data channel, e.g. a shared data channel. One such system is the long term evolution (LTE) of the UTRA(N) or E-UTRA(N) (Evolved-UTRA(N)) being specified by 3GPP. For an LTE system, one joint or separate control channels are to be specified. These control channels will carry information about transport parameters as HS-SCCH in HSDPA. The data will be carried on shared (data) channel(s). If some packets are sent on the shared data channel of E-UTRAN using preconfigured transport parameters such that those parameters are not sent on the control channel associated with the data channel for the initial transmission but are sent for the retransmission, this falls within the scope of this invention.

Embodiments of the invention may be realized in a base station apparatus comprising an interface configured to transmit radio signals and a processing unit operationally coupled with the interface. The processing unit may be configured to perform at least some of the steps described in connection with the flowchart of Figure 3 and in connection with Figure 2. The embodiments may be implemented as a computer program comprising instructions for executing a computer process for providing a high-speed packet radio service according to the embodiments of the invention.

Other embodiments of the invention may be realized in a user equipment apparatus comprising an interface configured to receive radio signals and a processing unit operationally coupled with the interface. The processing unit may be configured to perform at least some of the steps described in connection with the flowchart of Figure 3 and in connection with Figure 2. The embodiments may be implemented as a computer program comprising instructions for executing a computer process for receiving a high-speed packet radio service according to the embodiments of the invention.

Each of the computer programs may be stored on a computer program distribution medium readable by a computer or a processor. The computer program medium may be, for example but not limited to, an electric, magnetic, optical, infrared or semiconductor system, device or transmission medium. The computer program medium may include at least one of the following media: a computer readable medium, a program storage medium, a record medium, a computer readable memory, a random access memory, an erasable programmable read-only memory, a computer readable software distribution package, a computer readable signal, a computer readable telecommunications signal, computer readable printed matter, and a computer readable compressed software package.

Even though the invention has been described above with reference to an example according to the accompanying drawings, it is clear that the invention is not restricted thereto but it can be modified in several ways within the scope of the appended claims.

## Claims

1. A method, comprising:
transmitting (302) an initial transmission of a data packet on a data channel of a packet radio service, the transmission being carried out without a control channel message;
transmitting (314) a retransmission data packet on the data channel, **characterized by**
transmitting (312) a control channel message comprising a transmission time indicator indicating a transmission time interval of a previous transmission of the data packet.

2. A method, comprising:
performing (304) data packet detection with pre-determined reception parameters but without a reception of a control channel message of a packet radio service;
**characterized by**:
receiving (316) a control channel message comprising a transmission time indicator indicating a transmission time interval of a previous transmission of the data packet, if no data packet was detected;
receiving the retransmission data packet;
combining (320) the retransmission data packet and the previously transmitted data packet according to the transmission time indicator, and
detecting the previously transmitted data packet and the retransmission data packet.

3. An apparatus (120), comprising:
an interface (122) configured to transmit radio signals, and
a processing unit (124) operationally coupled with the interface and configured to transmit, through the interface, an initial transmission of a data packet on a data channel of a packet radio service, the transmission being carried out without a control channel message, transmit a retransmission data packet on the data channel, **characterized in that** the processing unit is further configured to transmit a control channel message comprising a transmission time indicator indicating a transmission time interval of a previous transmission of the data packet.

4. The apparatus of claim 3, wherein the processing unit is further configured to transmit the control channel message substantially simultaneously with the retransmission data packet.

5. The apparatus of claim 3 or 4, wherein the processing unit is further configured to derive the transmission time indicator from the transmission timing of the previous transmission of the data packet.

6. The apparatus of claim 5, wherein the transmission time indicator identifies a radio frame number and a radio sub-frame number of the radio sub-frame used for the initial transmission of the data packet.

7. The apparatus of claim 5, wherein the transmission time indicator defines the number of sub-frames in addition to a minimum number of sub-frames between the initial transmission and the retransmission of the data packet.

8. The apparatus of any one of claims 5 to 7, wherein the transmission time indicator identifies a hybrid automatic repeat request (HARQ) process related to the data packet, and the processing unit is configured to transmit the transmission time indicator in the control channel message at a location also used for transmitting a HARQ process number.

9. The apparatus according to any one of claims 3 to 8, wherein the apparatus is a base station providing High-speed Downlink Packet Access (HSDPA) as the packet radio service, the data channel is a High-speed Down-link Shared Channel (HS-DSCH), and the control channel is a High-speed Shared Control Channel of a Wideband Code Division Multiple Access (W-CDMA) standard for a Universal Mobile Telecommunications System (UMTS).

10. An apparatus (100), comprising:
an interface (108) configured to receive radio signals, and
a processing unit (104) operationally coupled with the interface and configured to perform data packet detection with pre-determined reception parameters but without a reception of a control channel message, **characterized in that** the processing unit is further configured to receive a control channel message comprising a transmission time indicator indicating a transmission time interval of a previous transmission of the data packet, if no data packet was detected, receive a retransmission data packet, combine the retransmission data packet and the previously transmitted data packet according to the transmission time indicator, and detect the contents of the previously transmitted data packet and the retransmission data packet.

11. The apparatus of claim 10, wherein the processing unit is further configured to identify the timing of the previously transmitted data packet from the transmission time indicator.

12. The apparatus of claim 10 or 11, wherein the processing unit is further configured to buffer data received in transmission time intervals in which no data packet was detected and discard buffered data associated with a transmission time interval for which a difference from a current transmission time interval exceeds a maximum number of transmission time intervals between two transmissions associated with the same data packet.

13. The apparatus of any one of claims 10 to 12, wherein the transmission time indicator defines the number of sub-frames in addition to a minimum number of sub-frames between the initial transmission and the retransmission associated with the same data packet.

14. The apparatus any one of claims 10 to 12, wherein the transmission time indicator identifies a radio frame number and a radio sub-frame number of the radio sub-frame used for the previous transmission of the data packet.

15. The apparatus of any one of claims 10 to 14, wherein the transmission time indicator identifies a hybrid automatic repeat request (HARQ) process related to the data packet, and the transmission time indicator is received at a location used for transmitting a HARQ process number.

16. The apparatus according to any one of claims 10 to 15, wherein the processing unit is further configured to detect signaling information comprised in the control channel message and indicating whether the information at the location used for transmitting the HARQ process number comprises the transmission time indicator indicating the transmission time interval of the previous transmission of the data packet, or whether it is a HARQ process number related to another data packet.

17. The apparatus according to any one of claims 10 to 16, wherein the apparatus is a mobile terminal receiving a High-speed Downlink Packet Access (HSDPA) as a packet radio service, the data channel is a High-speed Downlink Shared Channel (HS-DSCH), and the control channel is a High-speed Shared Control Channel of a Wideband Code Division Multiple Access (W-CDMA) standard for a Universal Mobile Telecommunications System (UMTS).

18. A computer program product encoding a computer program of instructions for executing a computer process carrying out the method according to claim 1 or claim 2.

## Patentansprüche

1. Verfahren, das die folgenden Schritte umfasst:
Übertragen (302) einer Anfangsübertragung eines Datenpakets auf einem Datenkanal eines Paketfunkdienstes, wobei die Übertragung ohne eine Steuerkanalnachricht ausgeführt wird;
Übertragen (314) eines Neuübertragungsdatenpakets auf dem Datenkanal,
**gekennzeichnet durch**
Übertragen (312) einer Steuerkanalnachricht, die einen Übertragungszeitanzeiger umfasst, der ein Übertragungszeitintervall einer früheren Übertragung des Datenpakets anzeigt.

2. Verfahren, das die folgenden Schritte umfasst:
Durchführen (304) von Datenpaketdetektion mit vorbestimmten Empfangsparametern, allerdings ohne einen Empfang einer Steuerkanalnachricht eines Paketfunkdienstes;
**gekennzeichnet durch:**
Empfangen (316) einer Steuerkanalnachricht, die einen Übertragungszeitanzeiger umfasst, der ein Übertragungszeitintervall einer früheren Übertragung des Datenpakets anzeigt, falls kein Datenpaket detektiert wurde;
Empfangen des Neuübertragungsdatenpakets;
Kombinieren (320) des Neuübertragungsdatenpakets und des früher übertragenen Datenpakets gemäß dem Übertragungszeitanzeiger, und
Detektieren des früher übertragenen Datenpakets und des Neuübertragungsdatenpakets.

3. Vorrichtung (120), die Folgendes umfasst:
eine Schnittstelle (122), die ausgelegt ist zum Übertragen von Funksignalen, und
eine Verarbeitungseinheit (124), die betriebswirksam mit der Schnittstelle gekoppelt ist und die ausgelegt ist zum Übertragen, über die Schnittstelle, einer Anfangsübertragung eines Datenpakets auf einem Datenkanal eines Paketfunkdienstes, wobei die Übertragung ohne eine Steuerkanalnachricht ausgeführt wird, zum Übertragen eines Neuübertragungsdatenpakets auf dem Datenkanal, **dadurch gekennzeichnet, dass** die Verarbeitungseinheit ferner ausgelegt ist zum Übertragen einer Steuerkanalnachricht, die einen Übertragungszeitanzeiger umfasst, der ein Übertragungszeitintervall einer früheren Übertragung des Datenpakets anzeigt.

4. Vorrichtung nach Anspruch 3, wobei die Verarbeitungseinheit ferner ausgelegt ist zum Übertragen der Steuerkanalnachricht im Wesentlichen gleichzeitig mit dem Neuübertragungsdatenpaket.

5. Vorrichtung nach Anspruch 3 oder 4, wobei die Verarbeitungseinheit ferner ausgelegt ist zum Ableiten des Übertragungszeitanzeigers vom Übertragungstiming der früheren Übertragung des Datenpakets.

6. Vorrichtung nach Anspruch 5, wobei der Übertragungszeitanzeiger eine Funkrahmennummer und eine Funksubrahmennummer des Funksubrahmens identifiziert, die für die Anfangsübertragung des Datenpakets verwendet wurden.

7. Vorrichtung nach Anspruch 5, wobei der Übertragungszeitanzeiger die Anzahl von Subrahmen zusätzlich zu einer minimalen Anzahl von Subrahmen zwischen der Anfangsübertragung und der Neuübertragung des Datenpakets definiert.

8. Vorrichtung nach einem der Ansprüche 5 bis 7, wobei der Übertragungszeitanzeiger einen Hybrid-Automatische-Wiederholungsanforderungs-Prozess bzw. HARQ-Prozess identifiziert, der sich auf das Datenpaket bezieht, und die Verarbeitungseinheit ausgelegt ist zum Übertragen des Übertragungszeitanzeigers in der Steuerkanalnachricht an einem Ort, der auch für das Übertragen einer HARQ-Prozessnummer verwendet wird.

9. Vorrichtung nach einem der Ansprüche 3 bis 8, wobei die Vorrichtung eine Basisstation ist, die High-Speed Downlink Packet Access (HSDPA) als den Paketfunkdienst bereitstellt, wobei der Datenkanal ein High-Speed Downlink Shared Channel (HS-DSCH) ist und der Steuerkanal ein High-Speed Shared Control Channel eines Wideband Code Division Multiple Access(W-CDMA)-Standards für ein Universal Mobile Telecommunications System (UMTS) ist.

10. Vorrichtung (100), die Folgendes umfasst:
eine Schnittstelle (108), die ausgelegt ist zum Empfangen von Funksignalen, und
eine Verarbeitungseinheit (104), die betriebswirksam mit der Schnittstelle gekoppelt ist und die ausgelegt ist zum Durchführen von Datenpaketdetektion mit vorbestimmten Empfangsparametern, allerdings ohne Empfang einer Steuerkanalnachricht, **dadurch gekennzeichnet, dass** die Verarbeitungseinheit ferner ausgelegt ist zum Empfangen einer Steuerkanalnachricht, die einen Übertragungszeitanzeiger umfasst, der ein Übertragungszeitintervall einer früheren Übertragung des Datenpakets anzeigt, falls kein Datenpaket detektiert wurde, zum Empfangen eines Neuübertragungsdatenpakets, zum Kombinieren des Neuübertragungsdatenpakets und des früher übertragenen Datenpakets gemäß dem Übertragungszeitanzeiger und zum Detektieren des Inhalts des früher übertragenen Datenpakets und des Neuübertragungsdatenpakets.

11. Vorrichtung nach Anspruch 10, wobei die Verarbeitungseinheit ferner ausgelegt ist zum Identifizieren des Timings des früher übertragenen Datenpakets aus dem Übertragungszeitanzeiger.

12. Vorrichtung nach Anspruch 10 oder 11, wobei die Verarbeitungseinheit ferner ausgelegt ist zum Puffern von Daten, die in Übertragungszeitintervallen empfangen wurden, in denen kein Datenpaket detektiert wurde und zum Verwerfen von gepufferten Daten, die mit einem Übertragungszeitintervall assoziiert sind, für das eine Differenz zu einem aktuellen Übertragungszeitintervall eine Maximalanzahl von Übertragungszeitintervallen zwischen zwei Übertragungen, die mit demselben Datenpaket assoziiert sind, überschreitet.

13. Vorrichtung nach einem der Ansprüche 10 bis 12, wobei der Übertragungszeitanzeiger die Anzahl von Subrahmen zusätzlich zu einer minimalen Anzahl von Subrahmen zwischen der Anfangsübertragung und der Neuübertragung, die mit demselben Datenpaket assoziiert ist, definiert.

14. Vorrichtung nach einem der Ansprüche 10 bis 12, wobei der Übertragungszeitanzeiger eine Funkrahmennummer und eine Funksubrahmennummer des Funksubrahmens identifiziert, die für die frühere Übertragung des Datenpakets verwendet wurden.

15. Vorrichtung nach einem der Ansprüche 10 bis 14, wobei der Übertragungszeitanzeiger einen Hybrid-Automatische-Wiederholungsanforderungs-Prozess bzw. HARQ-Prozess identifiziert, der sich auf das Datenpaket bezieht, und der Übertragungszeitanzeiger an einem Ort empfangen wird, der auch für das Übertragen einer HARQ-Prozessnummer verwendet wird.

16. Vorrichtung nach einem der Ansprüche 10 bis 15, wobei die Verarbeitungseinheit ferner ausgelegt ist zum Detektieren von Signalisierungsinformationen, die in der Steuerkanalnachricht enthalten sind, und zum Anzeigen, ob die Informationen an dem Ort, die zum Übertragen der HARQ-Prozessnummer verwendet werden, den Übertragungszeitanzeiger umfassen, der das Übertragungszeitintervall der früheren Übertragung des Datenpakets anzeigt, oder ob es eine HARQ-Prozessnummer ist, die sich auf ein anderes Datenpaket bezieht.

17. Vorrichtung nach einem der Ansprüche 10 bis 16, wobei die Vorrichtung ein mobiles Endgerät ist, das High-Speed Downlink Packet Access (HSDPA) als einen Paketfunkdienst empfängt, wobei der Datenkanal ein High-Speed Downlink Shared Channel (HS-DSCH) ist und der Steuerkanal ein High-Speed Shared Control Channel eines Wideband Code Division Multiple Access(W-CDMA)-Standards für ein Universal Mobile Telecommunications System (UMTS) ist.

18. Computerprogrammprodukt, das ein Computerprogramm von Anweisungen zum Ausführen eines Computerprozesses, der das Verfahren nach Anspruch 1 oder Anspruch 2 ausführt, codiert.

## Revendications

1. Procédé, comprenant :
la transmission (302) d'une transmission initiale d'un paquet de données sur un canal de données d'un service radio par paquets, la transmission étant exécutée sans message de canal de commande ; la transmission (314) d'un paquet de données de retransmission sur le canal de données, **caractérisé par**
la transmission (312) d'un message de canal de commande comprenant un indicateur de temps de transmission indiquant un intervalle de temps de transmission d'une transmission précédente du paquet de données.

2. Procédé, comprenant :
l'exécution (304) d'une détection de paquets de données avec des paramètres de réception prédéterminés mais sans réception d'un message de canal de commande d'un service radio par paquets ;
**caractérisé par** :
la réception (316) d'un message de canal de commande comprenant un indicateur de temps de transmission indiquant un intervalle de temps de transmission d'une transmission précédente du paquet de données, si aucun paquet de données n'a été détecté ;
la réception du paquet de données de retransmission ;
la combinaison (320) du paquet de données de retransmission et du paquet de données transmis précédemment conformément à l'indicateur de temps de transmission, et
la détection du paquet de données transmis précédemment et du paquet de données de retransmission.

3. Appareil (120), comprenant :
une interface (122) configurée pour transmettre des signaux radio, et
une unité de traitement (124) couplée opérationnellement à l'interface et configurée pour transmettre, par le biais de l'interface, une transmission initiale d'un paquet de données sur un canal de données d'un service radio par paquets, la transmission étant exécutée sans message de canal de commande, transmettre un paquet de données de retransmission sur le canal de données, **caractérisé en ce que** l'unité de traitement est configurée pour transmettre un message de canal de commande comprenant un indicateur de temps de transmission indiquant un intervalle de temps de transmission d'une transmission précédente du paquet de données.

4. Appareil selon la revendication 3, dans lequel l'unité de traitement est configurée en outre pour transmettre le message de canal de commande sensiblement simultanément au paquet de données de retransmission.

5. Appareil selon la revendication 3 ou 4, dans lequel l'unité de traitement est configurée en outre pour dériver l'indicateur de temps de transmission à partir du temps de transmission de la transmission précédente du paquet de données.

6. Appareil selon la revendication 5, dans lequel l'indicateur de temps de transmission identifie un numéro de trame radio et un numéro de sous-trame radio de la sous-trame radio utilisée pour la transmission initiale du paquet de données.

7. Appareil selon la revendication 5, dans lequel l'indicateur de temps de transmission définit le nombre de sous-trames en plus d'un nombre minimum de sous-trames entre la transmission initiale et la retransmission du paquet de données.

8. Appareil selon l'une quelconque des revendications 5 à 7, dans lequel l'indicateur de temps de transmission identifie un processus de requête de retransmission automatique hybride (HARQ) lié au paquet de données, et l'unité de traitement est configurée pour transmettre l'indicateur de temps de transmission dans le message de canal de commande à un emplacement utilisé également pour transmettre un numéro de processus HARQ.

9. Appareil selon l'une quelconque des revendications 3 à 8, l'appareil étant une station de base fournissant un service d'accès par paquets de liaison descendante à haut débit (HSDPA) comme service radio par paquets, le canal de données étant un canal partagé de liaison descendante à haut débit (HS-DSCH), et le canal de commande étant un canal partagé de commande à haut débit d'une norme d'accès multiple à différence de code à large bande (W-CDMA) d'un système de télécommunications mobiles universel (UMTS).

10. Appareil (100), comprenant :
une interface (108) configurée pour recevoir des signaux radio, et
une unité de traitement (104) couplée opérationnellement à l'interface et configurée pour exécuter une détection de paquets de données avec des paramètres de réception prédéterminés mais sans réception d'un message de canal de commande, **caractérisé en ce que** l'unité de traitement est configurée en outre pour recevoir un message de canal de commande comprenant un indicateur de temps de transmission indiquant un intervalle de temps de transmission d'une transmission précédente du paquet de données, si aucun paquet de données n'a été détecté, recevoir un paquet de données de retransmission, combiner le paquet de données de retransmission et le paquet de données transmis précédemment conformément à l'indicateur de temps de transmission, et détecter le contenu du paquet de données transmis précédemment et du paquet de données de retransmission.

11. Appareil selon la revendication 10, dans lequel l'unité de traitement est configurée en outre pour identifier le temps du paquet de données transmis précédemment à partir de l'indicateur de temps de transmission.

12. Appareil selon la revendication 10 ou 11, dans lequel l'unité de traitement est configurée en outre pour tamponner les données reçues dans des intervalles de temps de transmission dans lesquels aucun paquet de données n'a été détecté et rejeter les données tamponnées associées à un intervalle de temps de transmission pour lequel une différence par rapport à un intervalle de temps de transmission actuel dépasse un nombre maximum d'intervalles de temps de transmission entre deux transmissions associées au même paquet de données.

13. Appareil selon l'une quelconque des revendications 10 à 12, dans lequel l'indicateur de temps de transmission définit un nombre minimum de sous-trames entre la transmission initiale et la retransmission associées au même paquet de données.

14. Appareil selon l'une quelconque des revendications 10 à 12, dans lequel l'indicateur de temps de transmission identifie un numéro de trame radio et un numéro de sous-trame radio de la sous-trame radio utilisée pour la transmission précédente du paquet de données.

15. Appareil selon l'une quelconque des revendications 10 à 14, dans lequel l'indicateur de temps de transmission identifie un processus de requête de répétition automatique hybride (HARQ) lié au paquet de données, et l'indicateur de temps de transmission est reçu à un emplacement utilisé pour transmettre un numéro de processus HARQ.

16. Appareil selon l'une quelconque des revendications 10 à 15, dans lequel l'unité de traitement est configurée en outre pour détecter des informations de signalisation comprises dans le message de canal de commande et indiquant que les informations à l'emplacement utilisé pour transmettre le numéro de processus HARQ comprennent ou non l'indicateur de temps de transmission indiquant l'intervalle de temps de transmission de la transmission précédente du paquet de données, ou qu'il s'agit ou non d'un numéro de processus HARQ lié à un autre paquet de données.

17. Appareil selon l'une quelconque des revendications 10 à 16, l'appareil étant un terminal mobile recevant un service d'accès par paquets de liaison descendante à haut débit (HSDPA) comme service radio par paquets, le canal de données étant un canal partagé de liaison descendante à haut débit (HS-DSCH), et le canal de commande étant un canal partagé de commande à haut débit d'une norme d'accès multiple à différence de code à large bande (W-CDMA) d'un système de télécommunications mobiles universel (UMTS).

18. Produit de programme informatique codant un programme informatique d'instructions pour exécuter un processus informatique exécutant le procédé selon la revendication 1 ou 2.
